# EUROPEAN PATENT APPLICATION

(11) **EP 4 410 435 A1**
(43) Date of publication of application: **07.08.2024**
(21) Application number: 24155235.5
(22) Date of filing: 01.02.2024
(51) Int. Cl.: B03C 5/02, B03C 1/023, C02F 1/469, H05K 7/20, B03C 11/00

(54) **MAINTENANCE SYSTEM FOR ELECTRIC INSULATION OF A CONDITIONING FLUID**

(30) Priority: 03.02.2023 IT 202300001803
(71) Applicant: IVECO S.P.A., 10156 Torino (IT)
(72) Inventor: RUSSO, Gerardo, 10156 TORINO (IT)
(74) Representative: Studio Torta S.p.A.

(57) **Abstract**

Maintenance system (3) of the electrical resistance of a conditioning fluid (2) circulating in a conditioning system for a portion (1) in contact with such conditioning fluid (2), the maintenance system (3) being configured to reduce or eliminate the charged particles circulating in the conditioning fluid (2) in order to maintain the resistance value of the conditioning fluid (2) above a predetermined threshold.

## Description

### CROSS-REFERENCE TO RELATED APPLICATIONS

This patent application claims priority from Italian patent application no. 102023000001803 filed on February 3, 2023, the entire disclosure of which is incorporated herein by reference.

### TECHNICAL FIELD

The present invention relates to a maintenance system for electric insulation of a conditioning fluid.

The present invention is preferably, although not exclusively, applied to the cooling systems of high-voltage electronic devices for vehicles. In the following, reference will be made to such application by way of example.

### STATE OF THE PRIOR ART

In order to decrease pollutant emissions, the need is increasingly felt to use at least partially electric drive systems such as hybrid, purely electronic or hydrogen systems (the so-called fuel cell vehicles).

In such vehicles it is known that the electrical devices such as the fuel cells, the electrical machines and the power electronics devices such as inverters and PDUs (Power Distribution Unit) need to be cooled (or possibly heated) in order to maintain their temperature in an optimal operating range.

For such purpose, various conditioning systems are known such as the fluid conditioning systems. Such systems comprise a conditioning fluid which circulates in contact with a wall of the device to be conditioned removing heat therefrom, as is known.

Such fluids, being in contact with high-voltage devices have a high resistance so as to prevent discharges from dangerously passing in the conditioning fluid and thus towards other vehicle systems with potentially catastrophic consequences.

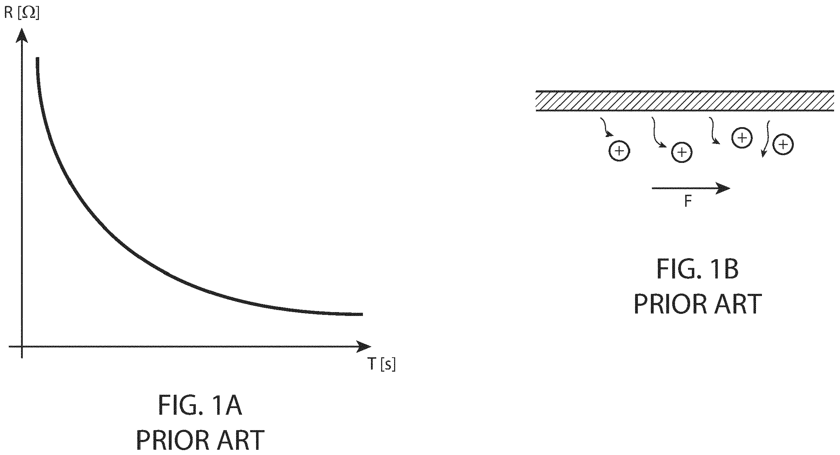

However, it has been noted, as is illustrated in Figure 1A, that the resistance of such conditioning fluid tends to vary, in particular to decrease, over time. To such end, it is known to have to periodically replace the conditioning fluid so as to bring it back to the optimal resistance value or clean the aforementioned filters.

Such operation is clearly a remarkable loss of time and thus implies a consequent increase in costs due to the inactivity of the vehicle during such operation.

The cause of such phenomenon is due to a ionization, schematically illustrated in Figure 1B, where charged particles, also ions or dipoles, are emitted from the material of the electrical device into the conditioning fluid flow, said charged particles enriching over time the conditioning fluid which becomes increasingly conductive, decreasing the electrical resistance thereof. Elsewhere, such charged particles can be generated by chemical reactions in the conditioning fluid or by other elements of the conditioning system such as the ducts of the exchangers.

As mentioned, in order to recover such conditioning fluids, it is thus known to have to subject the same to deionization cycles which obviously result to be particularly expensive.

Alternatively, it is known to use materials which do not lead to such phenomenon, which anyway result to be extremely expensive.

Therefore, the need is felt to maintain the electric insulation of the conditioning fluid for conditioning systems of electrical devices in at least partially electric or hydrogen drive vehicles.

The object of the present invention is to satisfy the above-described needs in an optimized and cost-effective manner.

### SUMMARY OF THE INVENTION

The aforementioned object is achieved by a maintenance system for electric insulation of a conditioning fluid as claimed in the appended claims.

### BRIEF DESCRIPTION OF THE DRAWINGS

In order to better understand the present invention, a preferred embodiment is described in the following, by way of non-limiting example and with reference to the accompanying drawings, wherein:
- Figure 1A is a diagram illustrating the variation of electrical resistance, on the y axis, with respect to time, on the x axis, of a conditioning fluid according to the prior art;
- Figure 1B is a scheme illustrating a ionization condition in a conditioning fluid according to the prior art;
- Figure 2 is a schematic view of a first embodiment of a maintenance system for electric insulation according to the invention for a conditioning fluid;
- Figure 3 is a schematic view of a second embodiment of a maintenance system for electric insulation according to the invention for a conditioning fluid;
- Figure 4 is a schematic view of a third embodiment of a maintenance system for electric insulation according to the invention for a conditioning fluid; and
- Figures 5A and 5B are respective schematic views of a fourth and fifth embodiment of a maintenance system for electric insulation according to the invention for a conditioning fluid.

### DETAILED DESCRIPTION OF THE INVENTION

All the accompanying figures schematically illustrate a portion 1 in contact with a conditioning fluid 2, such as a cooling or heating fluid, housed in a space/duct being part, in general, of a conditioning system not specifically illustrated in turn preferably mounted on a vehicle, not illustrated.

In all the embodiments, the portion 1 can be a portion of an electrical device directly wet by the conditioning fluid 2 or a portion of duct surrounding or in direct contact with the aforementioned portion 1.

In particular, the electrical device can be any electrical device such as an electrical machine, a power electronics device such as an inverter or a PDU (Power Distribution Unit) or battery packs or a fuel cell or parts thereof.

The portion 1 can advantageously be metallic or polymeric/plastic.

In all the embodiments, at least one maintenance system 3 for insulation is provided configured to reduce or eliminate the ionic particles circulating in the conditioning fluid 2 in order to maintain at least in a predefined range, the electrical resistance value of the conditioning fluid 2, i.e. above a predetermined minimum value. In particular, the maintenance system 3 can maintain such electrical resistance value constant.

Advantageously, the maintenance system 3 comprises electromagnetic means configured to generate a voltage and/or an electromagnetic field configured to deviate the ionic particles so as to reduce or eliminate them from the conditioning fluid 2.

In particular, the maintenance system 3 can be sunk in the conditioning fluid 2 or placed outside thereof. Still, it can be configured to deviate or trap the ionic particles inside or outside the conditioning fluid 2, i.e. it can maintain them segregated in the conditioning fluid in a specific zone or it can extract them and couple them to extraction elements such as plates.

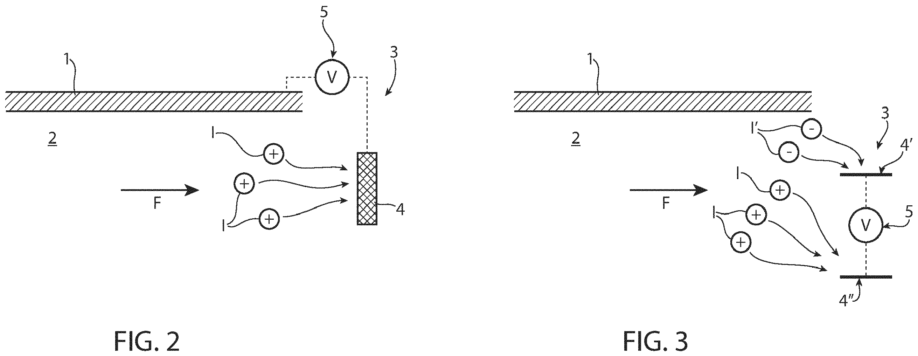

In the first embodiment of Figure 2, the maintenance system 3 essentially comprises a plate 4 interposed along the flow F of the conditioning fluid 2 and configured to act as cathode, i.e. to attract to itself the positively charged ions.

Advantageously, the plate 4 can be connected to a voltage generator system 5 electrically interposed between the plate 4 and a further conductive portion of the conditioning system, for example, as is illustrated, the portion 1 which in such case must be conductive.

The operation of the first embodiment according to the invention as described above is as follows.

The voltage generator system 5 creates a potential difference between the plate 4 (and a possibly opposite one on the portion 1) which thus tends to attract to itself the positive (or negative, depending on the applied voltage) ions circulating in the conditioning fluid 2, maintaining the level thereof below a certain threshold and thus the resistance within a predetermined minimum value.

In the second embodiment of Figure 3, the maintenance system 3 essentially comprises a pair of plates 4', 4" interposed along the flow F of the conditioning fluid 2 and configured to act as cathode and anode, respectively, i.e. to attract to themselves the respective ions of opposite charge.

The plates 4', 4" are thus electrically connected, via cable, to a voltage generator system 5 electrically interposed between them and advantageously positioned outside the duct defining the flow F of the conditioning fluid.

The operation of the second embodiment according to the invention as described above is as follows.

The voltage generator system 5 creates a charge on the plates 4', 4" which tend to attract positive and negative ions, respectively, circulating in the conditioning fluid 2, maintaining the level thereof below a certain threshold and thus the resistance within a predetermined minimum value.

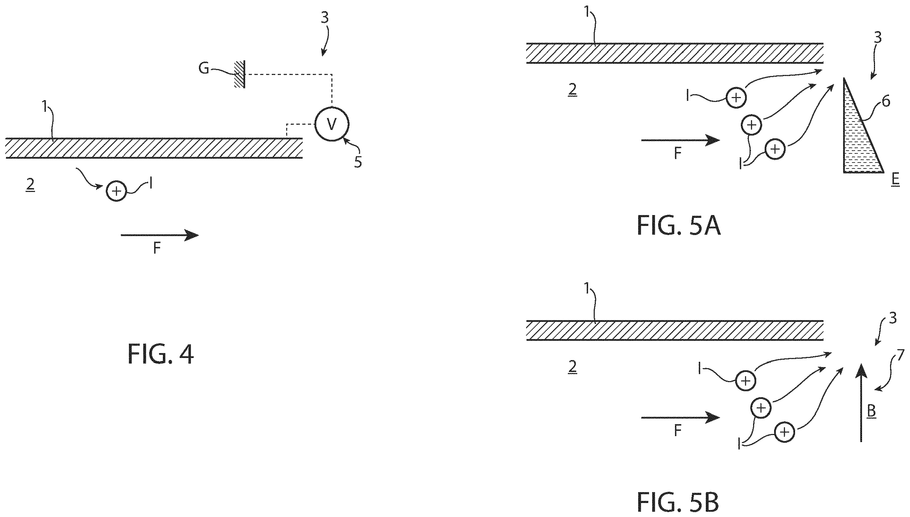

In the third embodiment of Figure 4, the maintenance system 3 essentially comprises a voltage generator system 5 electrically interposed between the portion 1 and the ground G, i.e. the vehicle mass, so as to energize the portion 1 with a predetermined value.

The predetermined voltage value is a function of the material of which the portion 1 is composed, which must be conductive so as to be energized, and of the conditioning fluid 2 so as to compensate the electrochemical potential and thus inhibiting the production of ions.

The operation of the third embodiment according to the invention as described above is as follows.

The voltage generator system 5 creates a charge on the portion 1 which tends to compensate or exceed the electrochemical potential, in this manner the emission of ions in the conditioning fluid 2 is reduced to the minimum allowed for maintaining the resistance above the predetermined minimum value or possibly inverted.

In the fourth and fifth embodiments of Figures 5A and 5B, the maintenance system 3 essentially comprises an electric field generator system 6 (Figure 5A) and a magnetic field generator system 7 (Figure 5B) configured to generate an electric field E and a magnetic field B, respectively, passing through the flow F of conditioning fluid directed towards the portion 1 or predetermined storing portions.

To such end, the electric field E and the magnetic field B can advantageously be of variable value having greater (or smaller) intensity in the proximity of said portion 1, namely resulting in a non-zero gradient.

The electric field value E supplied by the electric field generator system 6 or the magnetic field value B supplied by the magnetic field generator system 7 is such to maintain the ions in the proximity of the portion 1 so that they are not dispersed in the rest of the conditioning fluid 2 or in predetermined storing portions.

The operation of the fourth and fifth embodiments according to the invention as described above is as follows.

The electric field generator system 6 or the magnetic field generator system 7, by generating the respective electric field E and magnetic field B, tends to push the ions and the dipoles which are affected by the later towards a predefined portion of the portion 1, preventing the diffusion thereof in the conditioning fluid 2.

Furthermore, in the case of magnetic field 7, it is also possible to filter other magnetizable particles present in the conditioning fluid eliminating them from the circulation.

Based on the foregoing, the advantages of the maintenance system according to the invention are evident.

Thanks to the maintenance system according to the invention, integrated in the conditioning fluid and operative during the function thereof, the replacement frequency of the conditioning fluid or of the deionizing filters due to the deterioration of its electrical resistance is reduced.

Consequently, it is possible to prevent the step of changing the conditioning fluid and its electrolytic cleaning/filtering thus reducing costs and inoperability dead time of the conditioning system.

In particular, as is illustrated, different embodiments of the maintenance system are possible which allow the use on portions 1 and conditioning fluids 2 of different dimension and chemical composition.

Consequently, the proposed maintenance system can be implemented also on already existing systems, in a cost-effective manner.

Furthermore, thanks to the proposed system it is possible to use various types of materials, also more cost-effective and optimal, but disadvantageous according to the prior art due to the quick loss of electric insulation. This further allows optimizing the conditioning systems and reducing the costs thereof.

Still, it is clear that the described embodiments can have a synergic effect should a duct where a flow of conditioning fluid 2 is present have more maintenance systems of the same or different type.

Finally, it is clear that modifications and variations can be made to the maintenance system according to the present invention which do not anyway depart from the scope of protection defined by the claims.

Clearly, as mentioned, the portion 1, the duct defining the flow F of the conditioning fluid 2 and the system including the same can be of any type.

Similarly, the maintenance system 3 can be, as is shown, manufactured in various manners and geometries.

Clearly, the manners described above can be combined with one another so as to obtain a synergic effect due to the combination of their advantages.

## Claims

1. Maintenance system (3) of the electrical resistance of a conditioning fluid (2) circulating in a conditioning system for a portion (1) in contact with said conditioning fluid (2), said maintenance system (3) being configured to reduce or eliminate the charged particles circulating in said conditioning fluid (2) in order to maintain the resistance value of said conditioning fluid (2) above a predetermined threshold,
said maintenance system (3) comprising electromagnetic means configured to generate a voltage and/or an electromagnetic field so as to reduce or eliminate the charged particles circulating in the conditioning fluid (2) in order to maintain the resistance value of said conditioning fluid (2) constant.

2. Maintenance system according to claim 1, wherein said electromagnetic means are configured to reduce or eliminate the charged particles circulating in the conditioning fluid (2) in order to maintain the resistance value of said conditioning fluid (2) within a predefined range.

3. System according to one of the preceding claims, wherein said maintenance system (3) is placed sunk in said conditioning fluid (2).

4. System according to one of claims 1 or 2, wherein said maintenance system (3) is placed outside said conditioning fluid (2).

5. System according to one of claims from 1 to 3, wherein said maintenance system (3) comprises a plate (4) in said conditioning fluid (2) and a voltage generator (5) configured to energize said plate (4).

6. System according to claim 5, wherein said voltage generator (5) is connected at another end with respect to said plate (4) to said portion (1).

7. System according to one of claims 5 or 6, wherein said maintenance system (3) comprises a pair of plates (4', 4") in said conditioning fluid (2) connected to opposite ends of a voltage generator (5) configured to energize said plates (4', 4").

8. System according to one of the preceding claims, wherein said maintenance system (3) comprises a voltage generator (5) configured to energize said portion (1).

9. System according to claim 8, wherein the voltage value supplied by said voltage generator (5) is a function of the material of said portion (1) and said conditioning fluid (2) in order to minimize the electrolytic potential between said portion (1) and said conditioning fluid (2).

10. System according to one of the preceding claims, wherein said maintenance system (3) comprises an electric field generator (6) configured to generate an electric field (E) passing through said conditioning fluid (2).

11. System according to one of the preceding claims, wherein said maintenance system (3) comprises a magnetic field generator (7) configured to generate a magnetic field (B) passing through said conditioning fluid (2).

12. System according to claim 10 or 11, wherein said electric field (E) or said magnetic field (B) have a non-zero gradient.

13. Conditioning system comprising a duct/space housing a conditioning fluid (2) in contact with a portion (1) and a maintenance system (3) according to one of the preceding claims.

14. Electrical device assembly and conditioning system according to claim 13.

15. Vehicle comprising a conditioning system according to claim 13.
